# EUROPEAN PATENT APPLICATION

(11) **EP 3 882 328 A1**
(43) Date of publication of application: **22.09.2021**
(21) Application number: 20163793.1
(22) Date of filing: 18.03.2020
(51) Int. Cl.: C09K 21/14, B27K 3/15, B27K 3/16, B27K 3/52

(54) **MODIFIED WOOD, MODIFICATION SOLUTION, METHOD OF MODIFICATION AND USE THEREOF**

(71) Applicant: Kebony AS, 0377 Oslo (NO); Transfurans Chemicals, 2440 Geel (BE)
(72) Inventor: LANDE, Stig, N-1710 Sarpsborg (NO); HOYDONCKX, Hans, 2440 Geel (BE)
(74) Representative: Onsagers AS

(57) **Abstract**

Disclosed is a modification solution comprising
- furfuryl alcohol;
- a diluent;
- a fire retardant, and
- optionally a stabiliser,
wherein the fire retardant comprises:
- one or more nitrogen resins; and
- phosphoric acid;
a method of preparation thereof and wood modified therewith to achieve improve fire retardant and decay properties.

## Description

The present invention relates to modified wood, especially it relates to modified wood with improved fire-resistant properties combined with improved decay resistance.

### Background

Furan polymer impregnated wood is known for instance from EP1368167, EP1526954 and EP1534480. The treated wood has significantly improved properties with respect to water swelling, hardness and decay resistance among others. The impregnated wood is environmentally friendly and sustainable compared to wood treated with heavy metal salts for improved decay resistance.

The impregnation process includes impregnating the wood with a composition comprising furfuryl alcohol, an activator, a stabiliser and water, followed by a curing/polymerisation step wherein the activator initiates a polymerisation of the furfuryl alcohol within the wood. The stabiliser functions to control the onset of the polymerisation, so that the impregnation with the composition can take place, allowing the composition to penetrate the wood with no significant polymerisation taking place. The stabiliser also acts on the composition during storage, and it provides for reuse of any composition that does not penetrate the wood in subsequent impregnation processes.

Building materials including cladding and panel for offices, housings and other building structures are normally evaluated for fire resistance. Depending on jurisdiction, building type, size, location, etc., the regulatory authorities specify fire resistance requirements for building materials.

Different chemical compositions for imparting fire retardancy to wood are known.

US3,986,881 and US4,010,296 discloses a composition comprising an aqueous solution of partially reacted monomethylol dicyandiamide, melamine and phosphoric acid. Known problems with this type of fire retardants are hygroscopicity and leaching. Storage life in aqueous solution and concentrate is also discussed.

CA1206284 discloses an aqueous wood treatment solution comprising monomethylol guanyl urea phosphate salt and methylolated melamine. Problems discussed within this publication are storage life, leach resistance and hygroscopicity.

US5,151,225 describes a flame-retardant composition for treating wood. The composition is an aqueous solution of water-soluble amide, an oxy-acid of phosphorous, a metal salt of boron and sodium hydroxide. Problems discussed in this publication are corrosiveness and environmental issues, such as avoidance of formaldehyde.

Phosphorus-containing flame retardants are believed to primarily act in the solid phase of the wood material. The flame retardant is transformed into phosphoric acid by thermal degradation, and water is released from the substrate in the solid phase. A protective layer is developed by the polyphosphoric acid formed and by subsequent charring. The protective layer consists of interpenetrating networks of carbon and phosphorus oxides.

(HPO₃)ₙ + Cₓ(H₂O)ₘ → ["C"]ₓ + (HPO₃)ₙ·mH₂O

Nitrogen flame retardants are believed to act by several mechanisms: In the condensed phase, melamine or other nitrogen containing resins are transformed into cross-linked structures which promote char formation.

In conjunction with phosphorus, the nitrogen appears to enhance the attachment of the phosphorus to the wood material.

A mechanism in the gas phase may be the release of molecular nitrogen which dilutes the volatile polymer decomposition products.

A further mechanism is as an intumescent system that puffs up to produce foams. Intumescent flame-retardant systems consist of the following:
- "Carbon" donors (e.g. carbon polymers)
- Acid donors (e.g. phosphate)
- Spumific compounds (e.g. melamine)

The process of the intumescent mechanism is believed to be
- Softening of the binder/polymer
- Formation of polyphosphate
- Carbonization
- Gas formation by the spumific compound (e.g. melamine)
- Foaming of the mixture, e.g. nitrogen-source reacting to form ammonia, which in the presence of oxygen reacts to form nitrogen and water vapour.
- Solidification through cross-linking reactions.

The flame retardants result in char formation on the surface of a treated substrate when it is exposed to fire. The char layer will limit further contact between the wood and the air. The volume of the char layer obtained through carbonization and foaming provides an insulating protective layer. The char layer physically shields the wood from further attack from oxygen and heat.

The known fire retardants are applied in a separate process not linked to other wood modification processes.

For improving both decay resistance with furfuryl alcohol based modification and improving fire retardant properties, there are several problems with obtaining stable treatment solutions. Trying to incorporate both treatments in one treatment solution would generally be expected to result in increased stability problems.

### Objectives of the invention

The present invention aims at providing modified wood with improved fire-resistance, especially modified wood for use as building material.

The present invention further aims at providing the improved fire-resistance in wood that is modified to obtain improved decay resistance. Preferably the improved fire resistance and decay resistance is obtained in one wood modification process comprising one impregnation step and one curing step.

The present invention aims at providing a modification solution which is stable, allowing for transport and storage thereof. A stable modification solution is both economically and environmentally desirable, as it reduces any amount of degenerated solution that cannot be applied for modification of wood. With a stable solution it will be possible to reuse treatment solution recovered from the impregnation step. The stability of the modification solution will also have a positive influence on the possibility to recycle solution recovered during the drying phase and possibly also from stages of the curing process.

The present invention provides a modification solution comprising
- furfuryl alcohol;
- a diluent;
- a fire retardant, and
- optionally a stabiliser,
wherein the fire retardant comprises:
- one or more nitrogen resins; and
- phosphoric acid.

The modification solution is designed such that wood modified with this solution will be provided with improved fire-retardant properties and improved decay resistance compared to the untreated wood.

The modification solution is stable for at least three weeks at ambient temperature. As used herein "stable" means that the solution remains a clear solution without phase separation, sedimentation or any other turbidity.

When the modification solution is used for modifying wood, the wood is impregnated with the solution, and thereafter the wood is dried and cured. During the drying and curing vapour is formed. Upon condensation of this vapour can be used as diluent in the modification solution without affecting the stability thereof.

In one aspect of the modification solution the nitrogen resin comprises a formaldehyde reaction product with one or more nitrogen compounds selected from the group comprising melamine, dicyandiamide, guanylurea, trimethylol guanylurea, hexamethylol melamine, ammonia, urea, and combinations thereof. The nitrogen resin comprises oligomers that will polymerise with furfuryl alcohol and phosphoric acid.

In a further aspect of the modification solution the nitrogen resin comprises a formaldehyde reaction product with melamine and dicyandiamide.

In another aspect of the modification solution, at least a part of the furfuryl alcohol and at least a part of the nitrogen-resin are in the form of an integrated furfuryl alcohol and nitrogen resin composition comprising oligomerised nitrogen resin dissolved in furfuryl alcohol. The solution of the nitrogen resin in the furfuryl alcohol also contributes to providing a homogeneous modification solution when water is used as diluent.

The term "integrated furfuryl alcohol and nitrogen resin composition" is used here to refer to a composition comprising the nitrogen resin dissolved in furfuryl alcohol, and possibly partly reacted with furfuryl alcohol.

In yet another aspect of the modification solution the diluent is water, an organic diluent or a mixture of water and an organic diluent, preferably water.

In a further aspect of the modification solution the total concentration of furfuryl alcohol is 10-40 weight-%, preferably 15-35 weight-%, the concentration of fire retardant is 10-40 weight-%, preferably 15-30 weight-%. Here the fire retardant preferably consists of 15-30 weight-% phosphoric acid, preferably 18-25 weight-% phosphoric acid and the remainder up to 100 % is one or more nitrogen resins.

The present invention further provides a method of preparation of a modification solution comprising
- furfuryl alcohol;
- a diluent;
- a fire retardant, and
- optionally a stabiliser,
wherein the fire retardant comprises:
- one or more nitrogen resins; and
- phosphoric acid,
wherein the method comprises
a. preparing an integrated furfuryl alcohol and nitrogen resin composition by
   - dissolving a formaldehyde in furfuryl alcohol;
   - adding dicyandiamide to the first composition thereby forming a second composition;
   - adding melamine or a melamine-formaldehyde oligomer to the second composition to form a third composition; and
   - oligomerising the third composition thereby obtaining the integrated furfuryl alcohol and nitrogen resin composition;
b. adding water and phosphoric acid to the integrated furfuryl alcohol and nitrogen resin composition
c. optionally adding additional furfuryl alcohol.

In one aspect of the method, step c further comprises adding a nitrogen-containing stabilizer, preferably selected among ammonia, or water-soluble amines like ethanol amine, diethanol amine, triethanol amine, or combinations thereof.

The present invention further provides a modified wood that is modified with a polymer formed by the polymerisation of furfuryl alcohol and a fire retardant comprising:
- one or more nitrogen resins; and
- phosphoric acid.

In one aspect of the modified wood the nitrogen resin comprises a formaldehyde reaction product with at least one nitrogen compound selected from the group comprising melamine, dicyandiamide, guanylurea, trimethylol guanylurea, hexamethylol melamine, ammonia, urea, and combinations thereof.

In a further aspect of the modified wood, the nitrogen resin comprises a formaldehyde reaction product with melamine and dicyandiamide.

In another aspect the modified wood is fire retardant according to EN13823 and ISO 11925-2 and qualifies at least as class B, preferably class B-s3,d0. In a further aspect the modified wood is fire retardant according to EN13823 and ISO 11925-2 and qualifies as class B-s1,d0.

In yet another aspect the modified wood has a weight percent gain (WPG) compared to unmodified wood of 10-90.

The present invention further provides a method for modification of wood, wherein the method comprises
- impregnating the wood with a modification solution according to the present invention or a modification solution prepared according to the present invention;
- optionally applying reduced or increased pressure, or a combination thereof;
- drying and curing the impregnated wood at a temperature between 60 and 160 °C.

The term "a temperature between 60 and 160 °C" as applied here refers to one temperature or a temperature profile within the specified range.

In one aspect of the method for modification of wood, the wood is impregnated at a pressure of 2-10 bars for 0.5-40 hours.

In a further aspect of the method for modification of wood the drying and curing is performed for 24-170 hours.

The present invention also relates to use of a modification solution according to the present invention, or a modification solution prepared according to a method according to the present invention for the modification of wood.

Further the present invention relates to the use of the method according to the present invention for the modification of wood.

The present invention also relates to the use of modified wood according to the present invention as a building material or a building product, such as wood panel, house cladding, stairway, roofing, railing, moulding, joints, trimming, scaling, furniture, cabinet, sealing, decking, or floor board. Here, the term cladding refers to any type of cladding such as ship-lap, feather-edge, groove-feather, etc.

The fire retardant, in addition to improving the fire-retardant properties of the modified wood also acts as a catalyst/activator for the furfuryl alcohol polymerisation. Therefore, in a preferred embodiment of the present invention, no additional catalyst/activator is required.

The present invention provides a wood modification composition and method which results in a modified wood with improved fire retardancy and decay resistance. The composition comprising furfuryl alcohol and fire-retarding chemicals is stable at room temperatures and controllably polymerizable at increased temperatures.

The term "wood", as used herein refers to any wood or wood-like substance including solid wood elements such as beams, planks, boards, panels, construction elements etc., and elements made of subunits comprising one or more wood-based units such as wood laminates, veneers, plywood, wood-wool, etc. The term also refers to substances based on wood-like plant substances such as bamboo, coconut, hemp, cotton, etc. The term solid wood refers to solid lumber originating from both hardwood and softwood. Within the cross section of the solid wood both hardwood and sapwood may be present at any given ratio.

The term "phosphoric acid" as used herein refers to all oxy-acids of phosphorus, including H₃PO₄, H₃PO₉, 2H₃PO₄·H₂O, H₄P₂O₇, H₄P₂O₆, HPO₃, polyphosphoric acids and mixtures thereof, as well as dissociated forms of these phosphoric acids.

The term "nitrogen resin" or "N-resin", as used herein, refers to a formaldehyde reaction product of nitrogen compounds selected from the group comprising melamine, dicyandiamide, guanylurea, trimethylol guanylurea, hexamethylol melamine, ammonia, urea, and combinations thereof. The term "formaldehyde" as used herein refers to formaldehyde compounds such as paraformaldehyde and other polyoxymethylene polymers, formalin solutions, trioxane and hexamethylene tetramine, and combinations thereof.

The term "diluent", as used herein refers to a liquid wherein the other components of the modification solution are soluble. The diluent can be water, an organic diluent or a mixture of water and an organic diluent, such as alcohols, like methanol, ethanol, butanol, propanol, or glycol, preferably the diluent is water.

The term "modification/modified" as in "wood modification/modified wood", as used herein, refers to a process and the product thereof. Wood modification is the process wherein the wood is first impregnated with a modification liquid/treatment solution, such that the modification liquid enters the internal structure of the wood. Thereafter reactive constituents in the solution such as monomers and/or oligomers in the solution are polymerised by supplying energy, such as heat, to drive the polymerisation reaction. The polymer is formed within the internal structure of the wood. In the present invention the reactive constituents include furfuryl alcohol and the N-resin.

The modification solution may optionally comprise a stabilizer to increase the shelf-life of the modification solution. Applicable stabilizers preferably include nitrogen-containing stabilizers, such as stabilizers selected from the group comprising ammonia, ethanol amine, diethanol amine, triethanol amine, and combinations thereof. The function of the stabilizer is to increase the control of the polymerization of the modification solution, such that the solution can be stored with increased shelf-life, and increased reuse of solution that remains after impregnation of wood. By selecting a nitrogen-containing stabilizer, the stabilizer may further form part of the fire retardant.

WPG is a measure of the amount of modifying material incorporated in the wood by the modification.

The fire retarding properties of wood can be classified using standardised classification methods, as will be discussed in the examples.

The present invention provides for modification of wood to increase the wood's decay resistance and increase the wood's fire resistance at the same time, using only one impregnation solution that polymerises inside the wood and thereby alters the properties of the wood.

Wood modification with furfuryl alcohol or furfuryl-based polymers is well known. The method of impregnating the wood with the monomers/oligomers may be performed in different ways depending on the type of wood and the intended impregnation. It should be understood, that if full modification is intended, the monomers/oligomers should be allowed to fully penetrate the wood to be treated. If only a surface treatment is intended, the monomers/oligomers will only need to penetrate the surface layer to be treated. Depending on the wood structure and the time available for impregnation the impregnation can be performed by soaking the wood in the modification solution. To increase the penetration, external pressure may be applied. Alternatively, or combined with this, a reduced pressure may be applied prior to exposure to the impregnation solution. A reduced pressure may also be applied after the impregnation has been completed to remove excess modification solution. During curing the wood is also dried, removing the diluent and water formed by the polymerisation. Removing excess impregnation solution has a positive effect on the required drying.

### Examples

### Example 1 - preparation of modification solution WDM003.7N-mix

A premix resin, or integrated furfuryl alcohol and nitrogen resin composition, was prepared in a batch reactor with reflux cooler and heating system by adding 1906 g of furfuryl alcohol and 256 g paraformaldehyde (solid) to the reactor. The reactor was heated to 100 °C for 120 minutes while stirring, until the paraformaldehyde dissolved and a clear liquid was obtained.

The reactor was cooled to 95 °C and 832 g water was added. Dicyan diamide was added gradually until the free formaldhyde concentration was reduced to 4.3 wt%, while the temperature was maintained at 95 °C for 80 to 90 minutes. Then, melamine was added gradually until the free formaldehyde concentration was reduced to 2.3 %, while the temperature was maintained at 95 °C for 30 minutes.

The reactor was cooled to 30 °C and NH₃ (24.5%) was added until the pH of the premix resin was between 9 and 10.

Activated modification solution was prepared in a batch reactor with cooling system. A mix of 142 g water and 224 g of premix resin was stirred at 25 °C until a clear, homogenous mixture was obtained. Slowly, 48 g of phosphoric acid (85 %) was added while ensuring the temperature of the mixture did not exceed 35°C. The reaction was complete when no formaldehyde could be detected. The reactor was cooled to 20°C or less at the end of the reaction.

The final activated solution, named WDM003.7N-P35, was characterized by a water content of 48%, pH value of 2.6, viscosity of 5 mPas @25°C by Brookfield, and a solid yield of 32 to 33 % at 140°C.

Optionally, impregnation solutions with different concentrations could be obtained by adding additional water and/or phosphoric acid and/or furfuryl alcohol to the final activated solution.

The storage stability of the final phosphoric acid activated solution was more than 2 months in which the resin remains an aqueous solution without precipitation. Furthermore, this stability was confirmed by the absence of reduction of acidity as the pH of the mixture gradually increased over a period of 69 days from a pH of 2.6 to 4.2.

### Example 2 - preparation of modification solution WDM003.7C-mix

A premix resin, or integrated furfuryl alcohol and nitrogen resin composition, was prepared in a batch reactor with reflux cooler and heating system by adding 1123 g of furfuryl alcohol and 224 g paraformaldehyde (solid) to the reactor. The reactor was heated to 100 °C for 120 minutes while stirring, until the paraformaldehyde dissolved and a clear liquid was obtained. The reactor was cooled to 95 °C and 490 g water was added. Dicyan diamide was added gradually until the free formaldhyde concentration was reduced to 4 wt%, while the temperature was maintained at 95 °C for 80 to 90 minutes. Melamine was added gradually until the free formaldehyde concentration was reduced to 1.8 wt%, while the temperature was maintained at 95 °C for 30 minutes. The reactor was cooled to 30 °C at a pH level of 7 to 8.

This premix resin differs from the premix resin of example 1 in that no ammonia is added.

Activated modification solution was prepared in a batch reactor with cooling system. A mix of 152 g water and 322 g of premix resin was stirred at 25 °C until a clear, homogenous mixture was obtained. Slowly, 38 g of phosphoric acid (85 %) was added while ensuring the temperature of the mixture did not exceed 35 °C. The reaction was complete when no formaldehyde could be detected. The reactor was cooled to 20°C or less at the end of the reaction.

The final activated solution, named WDM003.7C-P30, was characterized by a water content of 48 %, a pH value of 3, viscosity of 5 mPas @25°C by Brookfield, and a solid yield of 36 % at 140°C.

Optionally, impregnation solutions with different concentrations could be obtained by adding additional water and/or phosphoric acid and/or furfuryl alcohol to the final activated solution.

The storage stability of the premix resin was more than 2 months.
The storage stability of the phosphoric acid activated solution was about 10-14 days.

### Example 3 - polymerisation

Following the same process as disclosed in example 1, a number of different impregnation mixtures were prepared and polymerised to provide information on the solid yield of each of the compositions. The composition of the dilute solutions in weight-% are provided in the table below. The first three rows disclose the amounts used for the preparation whereas the following four rows disclose the composition of the obtained mixtures. The mixtures were polymerised and dried at 140°C to obtain the solid yield of each mixture.

**Table 1. Composition and solid yield of N mix in weight-%.**

| **Code** | **WDM-N-P25** | **WDM-N-P35** | **WDM-N-P45** | **WDM-N-P65** |
|---|---|---|---|---|
| WDM003.7N-premix | 62.29 | 56.48 | 51.65 | 44.12 |
| Added H₂O | 25.74 | 32.67 | 38.42 | 47.40 |
| Added H₃PO₄ (85 %) | 11.97 | 10.85 | 9.93 | 8.48 |
| | | | | |
| FA | 31.15 | 28.25 | 25.83 | 22.07 |
| N resin dry | 13.72 | 12.44 | 11.37 | 9.72 |
| Total H₂O | 43.16 | 48.47 | 52.87 | 59.74 |
| H₃PO₄ (85 %) | 11.97 | 10.85 | 9.93 | 8.48 |
| | | | | |
| **Solid yield weight-%** | 34 | 32.5 | 31 | 27 |

Similarly the solid yield of an impregnation mixture prepared according to example 2 was tested. A solid yield of 36 weight-% was obtained, with a composition comprising 28.9 % furfuryl alcohol, 33.4 % N-resin, 29.5 % H₂O and 8.2 % H₃PO₄ (85 %).

### Example 4 - impregnation and modification of wood

Impregnation tests have been performed using impregnation solutions prepared according to the methods disclosed in examples 1, 2 and 3. The different N-mix solutions are labeled P25, P35, P45 and P65 corresponding to table 1. The higher label number refers to impregnation solutions containing larger amounts of water.

### Wood

Scots pine and Radiata pine have been selected for the testing.

**Scots pine** (*Pinus sylvestris*) is sampled from a standard cladding product with a ship lap profile. The cladding had a cross sectional, over-all dimension of 21 mm x 148 mm, with two rabbets, one on each side of the longest cross-sectional dimension. Profiling was done before treatment.

**Radiata pine** (*Pinus radiata*) was pre-moulded to an oversized shiplap profile (20 x148 mm) before treatment. After treatment the product was once more moulded to the final dimension (19 x 148 mm). This was done to remove possible surface effects and to simulate claddings, which are profiled after treatment.

### Impregnation process

The wood boards were restricted to 2.5 m in length and arranged in the impregnation mixture under increased pressure for a selected duration. The wood was lifted out of the impregnation solution and cured in an oven for the selected duration sufficient to both cure and dry the wood.

For treatments that aimed at maximum uptake, long pressure times were used. Two different curing temperatures, 120°C and 140°C were used.

The general schedules aimed at maximum uptake used was:
- Scots pine: Impregnation pressure 10.5 bar for 20-24 hours, followed by curing at 120°C or 140°C for 45-46 hours
- Radiata pine: Impregnation pressure 10.5 bar for 5 hours, followed by curing at 120°C or 140°C for 43-47 hours

Impregnation was also performed at other pressures and for shorter time periods, as will be discussed in table 2, below.

### Tests

### Single burning item (SBI) EN 13823

The impregnated boards were cut to 1.5 m lengths for vertical testing and to 1.0 m or 0.5 m for horizontal testing.

### Small flame test samples, EN ISO 11925-2

16 boards were randomly selected for this test. These samples were 250 mm long.

### Decay testing for natural durability, DS/CEN/TS 15083-1

Samples for this test were small blocks (15x25x50 mm). These were cut out of the treated boards. The test required 30 replicates for each treatment and each fungus. Preconditioning according to EN 84 were conducted before exposure to fungi. Untreated sapwood of Radiata pine and Scots pine was used as control samples.

### Results

Key numbers from one set of treatments are presented in table 2. *N* is the number of wood elements treated. Pressure and time are the parameters applied for the impregnation. MC is the moisture content after drying and curing was done at 120°C for 45 hours.

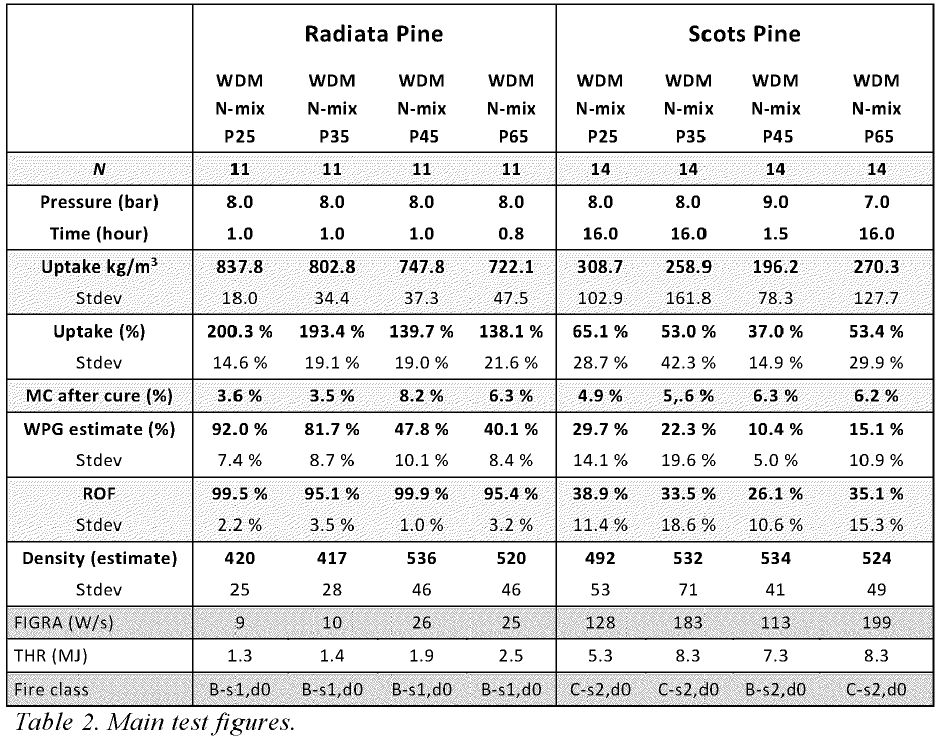

Treatment of Radiata pine is consistent and straightforward. Uptake is correlated to the void volume of the wood tissue. Ratio of Filling (ROF) is a calculated value describing the actual liquid filling potential. ROF for Radiata pine is close to 100% and the standard deviation is low.

Impregnation of Scots pine has a large variation in liquid uptake, and the uptake is lower than for Radiata pine. This is mainly caused by variations in heartwood content and possibly raw material density. However, the treatment schedule will also influence the uptake. WDM P45 (table 2) was pressurized for 1.5 hours, compared to the other concentrations that had 16 hours of pressure duration at 8 bars. This difference might explain why the ROF value is only 26.1% for this group. Wood density was similar between the groups. However, WDM P25 had slightly lower density than the other groups and had the highest ROF value of 38.9 %.

All the produced samples were subjected to SBI-tests. An important value is the FIGRA (Fire growth rate), which is presented in table 2. The limit for fire class B is FIGRA ≤ 120 W/s and Total Heat Release (THR) ≤ 7.5 MJ.

All treated Radiata pine panels passed the criteria for fire class B with a good margin.
The lowest FIGRA-value for Scots pine was 113 W/s, which is within class B. The FIGRA-values for the other tests were just above the limit for class B (ranging from 128 to 199 W/s) and hence, class C was achieved.

A further set of tests are presented in table 3. The wood was impregnated with compositions according to example 1 or 2, and the impregnations were aimed at maximum uptake, as discussed above.

Key values from these treatments and fire tests are summarized in table 3.

Treatment of Radiata pine with N- and C-mixes resulted in the best fire class achievable; B-s1,d0. The highest recorded FIGRA value was only 48.8 W/s, compared to the classification limit of 120 W/s. This was achieved with an N-mix with 65 parts water added.

Protection of Scots pine is more difficult than protection of Radiata pine. For Scots pine, the aim was to maximize chemical uptake in all treatments. Panel numbers (#) 11-14 in table 3 achieved fire class B-s2,d0. These panels had an uptake of 507.2 kg/m³.

Conclusions from SBI and small flame tests:
- Radiata pine, shiplap claddings (19x148 mm) was classified to Euroclass B-s1,d0, when treated with WDM003.7 N P-65 with average liquid uptake of 822 kg/m³.
- Scots pine shiplap cladding (21x148 mm) was classified to Euroclass B-s2,d0, when treated with WDM003.7 N P-35 with average liquid uptake of 507 kg/m³.

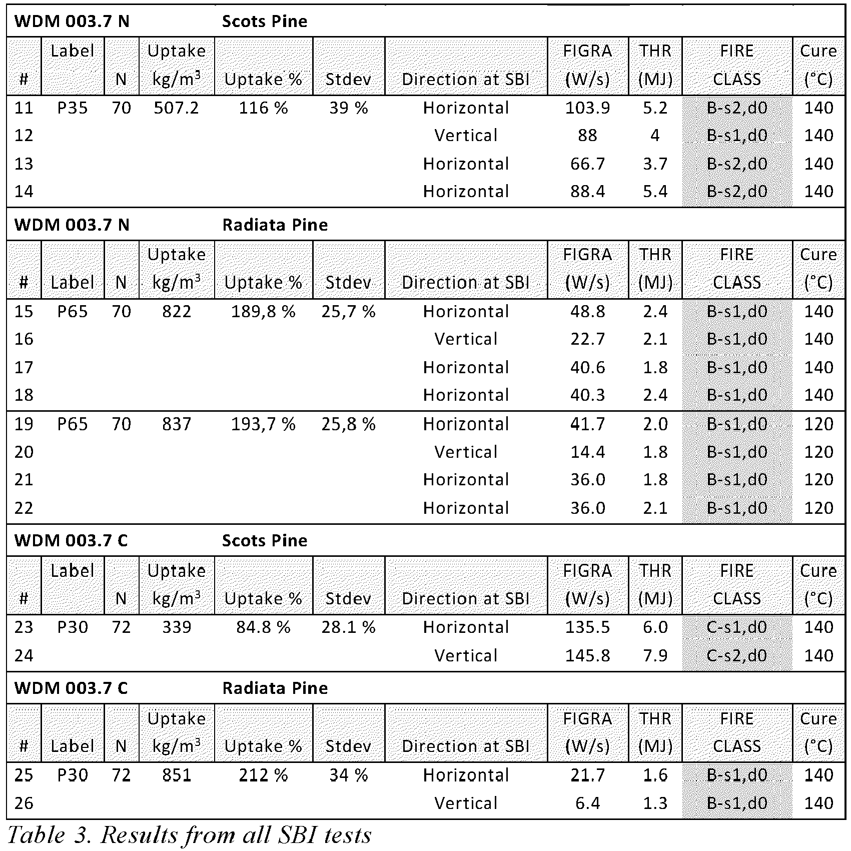

### Decay tests

Decay tests according to CEN/TS 15083-1:2005 and EN84 showed that a good decay protection was achieved. Samples #11, #15, #23 and #25 in table 3 were tested with both *Coniophora puteana* and *Poria placenta,* and all samples were classified as durability class 1. Reference samples of untreated Radiata pine and Scots pine were classified as class 5, not durable.

### Durability of reaction to fire properties

Indicative weathering tests have shown that a durable fire-retardant effect is achievable.

### Stability

The stability of the premix resins and the activated impregnation solutions have been tested. It was found that the premix resins had an acceptable shelf-life at ambient temperature (25°C) of more than 1 month. The activated solutions remained applicable for impregnation with an acceptable shelf-life of at least 3 weeks at ambient temperature (25°C). Also, the recyclability of the activated impregnation solutions was tested with acceptable results. This confirmed that the impregnation mixtures will be applicable in industrial processes.

## Claims

1. Modification solution comprising
- furfuryl alcohol;
- a diluent;
- a fire retardant, and
- optionally a stabiliser,
wherein the fire retardant comprises:
- one or more nitrogen resins; and
- phosphoric acid.

2. Modification solution according to claim 1, wherein the nitrogen resin comprises a formaldehyde reaction product with one or more nitrogen compounds selected from the group comprising melamine, dicyandiamide, guanylurea, trimethylol guanylurea, hexamethylol melamine, ammonia, urea, and combinations thereof.

3. Modification solution according to claim 2, wherein the nitrogen resin comprises a formaldehyde reaction product with melamine and dicyandiamide.

4. Modification solution according to claim 1, 2 or 3, wherein at least a part of the furfuryl alcohol and at least a part of the nitrogen resin are in the form of an integrated furfuryl alcohol and nitrogen resin composition comprising oligomerised nitrogen resin dissolved in furfuryl alcohol.

5. Modification solution according to any one of the claims 1-4, wherein the diluent is water, an organic diluent or a mixture of water and an organic diluent, preferably water.

6. Modification solution according to any one of the previous claims, wherein the total concentration of furfuryl alcohol is 10-40 weight-%, preferably 15-35 weight-%.

7. Modification solution according to any one of the previous claims, wherein the concentration of fire retardant is 10-40 weight-%, preferably 15-30 weight-%.

8. Modification solution according to any one of the previous claims, wherein the fire retardant consists of 15-30 weight-% phosphoric acid, preferably 18-25 weight-% phosphoric acid and the remainder up to 100 % is one or more nitrogen resins.

9. Method of preparation of a modification solution comprising
- furfuryl alcohol;
- a diluent;
- a fire retardant, and
- optionally a stabiliser,
wherein the fire retardant comprises:
- one or more nitrogen resins; and
- phosphoric acid, wherein the method comprises
a. preparing an integrated furfuryl alcohol and nitrogen resin composition by
- dissolving a formaldehyde in furfuryl alcohol;
- adding dicyandiamide to the first composition thereby forming a second composition;
- adding melamine or a melamine-formaldehyde oligomer to the second composition to form a third composition; and
- oligomerising the third composition thereby obtaining the integrated furfuryl alcohol and nitrogen resin composition;
b. adding water and phosphoric acid to the integrated furfuryl alcohol and nitrogen resin composition
c. optionally adding additional furfuryl alcohol.

10. Method according to claim 9, wherein step c further comprises adding a nitrogen-containing stabilizer, preferably selected among ammonia, ethanol amine, diethanol amine, triethanol amine or combinations thereof.

11. Modified wood **characterised by** being modified with a polymer formed by the polymerisation in wood of furfuryl alcohol and a fire retardant comprising:
- one or more nitrogen resins; and
- phosphoric acid.

12. Modified wood according to claim 11, wherein the nitrogen resin comprises a formaldehyde reaction product with at least one nitrogen compound selected from the group comprising melamine, dicyandiamide, guanylurea, trimethylol guanylurea, hexamethylol melamine, ammonia, urea, and combinations thereof.

13. Modified wood according to claim 11 or 12, wherein the modified wood is fire retardant according to EN13823 and ISO 11925-2 and qualifies at least as class B preferably class B-s3,d0.

14. Modified wood according to any one of claims 11-13, wherein the modified wood is fire retardant according to EN13823 and ISO 11925-2 and qualifies as class B-s1,d0.

15. Modified wood according to any one of claims 11-14, wherein the modified wood has a WPG compared to unmodified wood of 10-90 %.

16. Method for modification of wood, wherein the method comprises
- impregnating the wood with a modification solution according to any one of the claims 1-7 or a modification solution prepared according to claim 8 or 9;
- optionally applying reduced or increased pressure or a combination thereof;
- drying and curing the impregnated wood at a temperature between 60 and 160 °C.

17. Method for modification of wood according to claim 16, wherein the drying and curing is performed for 24-170 hours.

18. Use of a modification solution according to any one of the claims 1-8 or a modification solution prepared according to claim 9 or 10 for the modification of wood.

19. Use of the method according to any one of the claims 16-17 for the modification of wood.

20. Use of modified wood according to any one of the claims 11-15 as a building material or a building product such as wood panel, house cladding, stairway, roofing, railing, moulding, joints, trimming, scaling, furniture, cabinet, sealing, decking, or floor board.
